Europäisches Patentamt

European Patent Office

Office européen des brevets

(19)

(11) **EP 0 772 782 B1**

(12) **EUROPEAN PATENT SPECIFICATION**

(45) Date of publication and mention
of the grant of the patent:
**05.12.2001 Bulletin 2001/49**

(51) Int Cl.7: **G01P 5/00**, G01P 5/22,
G01F 1/708

(21) Application number: **95928763.2**

(22) Date of filing: **21.07.1995**

(86) International application number:
**PCT/US95/09975**

(87) International publication number:
**WO 96/03631 (08.02.1996 Gazette 1996/07)**

(54) **SAMPLED-CONTINUOUS PROBABILITY METHOD OF VELOCITY MEASUREMENT OF THE OBJECT HAVING INFORMATIVELY-STRUCTURAL INHOMOGENEITY**

GESCHWINDIGKEITSMESSUNG NACH DER WAHRSCHEINLICHKEITSMETHODE MIT
KONTINUIERLICHER ABTASTUNG FÜR OBJEKTE MIT STRUKTURELLEN INHOMOGENITÄTEN
ALS INFORMATIONTRÄGER

PROCEDE A PROBABILITE CONTINUE ECHANTILLONNEE PERMETTANT DE MESURER LES
VITESSES D'UN OBJET PRESENTANT UNE INHOMOGENEITE STRUCTURALE INFORMATIVE

(84) Designated Contracting States:
**AT BE CH DE ES FR GB IT LI NL SE**

(30) Priority: **22.07.1994 US 278827**

(43) Date of publication of application:
**14.05.1997 Bulletin 1997/20**

(73) Proprietor: **RELIN, Arkadi
Langhorne, PA 19053 (US)**

(72) Inventor: **RELIN, Arkadi
Langhorne, PA 19053 (US)**

(74) Representative: **Newby, Martin John
JY & GW Johnson,
Kingsbourne House,
229-231 High Holborn
London WC1V 7DP (GB)**

(56) References cited:
US-A- 4 050 747    US-A- 4 177 463
US-A- 4 201 083    US-A- 4 364 114
US-A- 4 896 268    US-A- 4 956 789

• DATABASE WPI Section PQ, Week 8710 Derwent
Publications Ltd., London, GB; Class Q42, AN
87-071755 XP002061456 & SU 1 245 663 A (RELIN
A.B.) , 23 July 1986 & SU 1 245 663 A

EP 0 772 782 B1

**Description**

Technical Field

This invention relates to a sampled-continuous probability method of velocity measurement of an object having natural informatively-structural inhomogeneity while moving relatively to an area of observation.

Background Art

Such velocity measurement methods are known. They involve for example:

1) different multicomponent streams (such as hydrotransport, pneumotransport, gaseous, and chemical streams, molten metals, free-flowing bulk materials, plazmeous streams with metal filling, etc.), and also chemically homogeneous streams with hydrodynamic turbulent formations (disturbances, vortexes); streams with inhomogeneity in density, optical characteristics, temperature and other characteristics structurally distributed along the direction of their motion; and
2) different articles made from natural and man-made materials (rolled metal, paper, films, plates, fibers - in the process of their manufacturing), moving parts of machines and objects having inhomogeneity in density, thickness, temperature, optical properties, magnetic and other parameters which are structurally and continuously spread along the direction of their motion.

In order to provide effective sensing of the motion of such objects and to investigate the motion, it is necessary on some occasions to use practically inertialess methods (and devices based on such methods) for measurement of the velocity of their motion. This condition is especially important when solving the sensing problems of the dynamic motion of high speed objects, pulsating streams, fast moving and short objects, etc. At the same time it is necessary to provide the possibility of receiving information not only about the average velocity of the object, but also about velocity variations during the short period of observation.

There are correlation methods (and devices based on such methods) for measuring the velocity of objects having informatively-structural inhomogeneity continuously spread along the direction of motion of the object. Such known methods are disclosed, for example, in US-A-3595078 (Bek, 1971) and US-A- 4201083 (Kurita, 1980).

These known methods measure the velocity of an object by determining the time spent by its local parts for motion in the limits of a fixed measurement base, on the edge of which two identical (as to shape and area) sensing zones are located. In these sensing zones the images of indicative fields, which define the informatively-structural inhomogeneity of the object, are continuously extracted and memorized. In these known cases the determination of the time needed to pass the base is achieved by computing the mutual correlative function of two random signals proportional to random changes of images of the indicative field in the first and second sensing zones, accordingly, along the motion of the object. This method, however, requires:

- much time to compute and search for the extremum of correlative function, which is done at the cost of adjustable retardation of the time of the first signal used for processing;
- extended use of random signals, which can be received only with the availability of a large measurement base; and
- high demands of the stationarily and frequency bound signals used for processing.

Besides, the integrative (continuous) character of correlation methods makes it almost impossible to use them to sense the dynamics of motion of such objects with the required accuracy, threshold of sensitivity and high speed of velocity measurement.

The sampled-continuous probability method (and devices based on it) for velocity measurement of objects is also known. See, for example, the inventions disclosed in USSR No. 579382 (A.B. Relin, et al. 1977), No. 606952 (A. B. Relin, et al., 1978), No. 651092 (A.B. Relin, 1979), and No 1.245.663 (A.B. Relin, et al., 1986).

The sampled-continuous probability (SCP) method of velocity measurement differs from correlation methods. The SCP method features a periodical sequence of cycles of velocity measurement comprising determining the time a selected local part of the object moves along a measuring base of a zone of observation.

The SCP method consists of:

- positioning the measuring base of known length ($L_{AB}$) in the zone of observation parallel to the direction of the motion of the object, and
- disposing in the zone of observation, in the direction of motion of the object, the first and the second zones of sensing of the inhomogeneity, said sensing zones having identical shapes and areas, the axes of symmetry of the sensing zones crossing the ends (A and B) of the measuring base and being located respectively parallel to each other;

- selecting the dominant informative component of the informatively-structural inhomogeneity of the object in the sensing zones;
- selecting the local part of the object in the beginning of the current cycle of velocity measurement in the first sensing zone (A), and
- determining in said local part the informative aggregate of chosen informative signs of the dominant informative component of the inhomogeneity, for example the instant value of the component and the sign (+ or -) of its derivative, and
- memorizing said informative aggregate of signs for identification of the "image" of the selected local part of the object, and simultaneously
- starting the determination of the time for the local part to move along the measuring base ($L_{AB}$);
- selecting the local parts of the moving object in second sensing zone (B), said selecting being executed continuously, and
- determining the informative aggregate of the chosen informative signs in the continuously selected local parts, and
- comparing the memorized informative aggregate of the signs with the determined informative aggregates of the signs, the comparing being executed during the interval of the time of identification using said selected informative signs, the interval of time of identification being determined in consideration of a range of possible changes of velocity during the given time of the measurements of the velocity; then
- finishing said comparing, the finishing of said comparing being executed; either at the moment of coincidence of the compared memorized informative aggregate of signs with one of said determined informative aggregate of signs, said coincidence taking place when the image of said selected local part is determined in said second sensing zone; or at the moment when the interval of time of identification ends while said coincidence of said compared aggregates does not take place;
- determining the time of motion of the local part along the measuring base at the moment of said comparing at the commencement of the comparing of said aggregate of signs, and
- computation of the velocity of the object during the current cycle of measurement, the velocity being computed by dividing the known length of the measuring base over the determined time of motion of the selected local part along the measuring base;
- erasing the value of the object velocity memorized from the last resultative cycle of velocity measurement, and
- memorizing the computed value of object velocity at the end of the current cycle of velocity measurement; or
- saving the value of object velocity memorized from the last resultative cycle of velocity measurement, the saving of said velocity value being executed when the comparison ends in said moment of termination of the interval of time of identification in the end of the current cycle of velocity measurement.

It follows from the analysis of the SCP method (see, for example, A.B. Relin "The systems of automatic sensing of technological parameters of suction dredges" - Moscow, "Stroyizdat", 1985, pp. 55 - 70) that the length of a measuring base ($L_{AB}$) is selected with the consideration of a given maximal tolerable error of measurement $\delta_{vc(max)}$ and a range of changes of velocity, and while executing the necessary condition:

$$\bar{t}_{l(min)} (P) \cdot V_{min} > L_{AB} < \bar{t}_{f(min)} (P) \cdot V_{max} \cdot V_{min} /$$

$$(V_{max} - V_{min}), \tag{1}$$

where

| | |
|---|---|
| $V_{min}, V_{max}$ | are respectively, minimal and maximal values of the given range of changes of said velocity in m/sec; |
| $t_{lmin} (P)$ | is the probability value of a minimum possible time of "life" of the "image" of the local part in a process of its motion along the zone of observation, said time of "life" being determined at the moment when the quantity of "deformation" of the signs of identification of "image" exceeds a threshold of sensitivity $\Delta X_0$ of the process of the determination of the signs of the signs of identification, and is in sec; |
| $\bar{t}_{fmin} (P)$ | is a probability value in sec of a minimum possible time interval between two sequently placed local parts of the object (along the direction of its motion), which have the identical "images"; and |
| P | is the given level of probability of the values $\bar{t}_{lmin}(P)$ and $\bar{t}_{fmin}(P)$, for example (0.95), which are determined as a result of statistical and probability investigations of evolved processes of the selected informative signs of the dominant component of the informatively-structural inhomogeneity of the object |

in a whole range of changes of the velocity of the motion of the object.

After finishing a current cycle of velocity measurement, the next following cycle of measurement starts. In the new following cycle of velocity measurement all operations listed above are executed similarly. The information about the informative signs which were memorized from the current cycle of measurement are erased at the end of each cycle. The method provides the execution of a few tens of measurement cycles per second. Thus, the periodic, and practically continuous, repetition of the velocity measurement cycles makes it possible to receive with the help of the SCP method more complete information about the motion dynamics of the objects while using substantially smaller observation zones for the objects. This makes the use of the SCP method preferable compared with similar possibilities of known correlation methods for solving measuring problems.

However, it should be noted that, in the known SCP method, the time quantization interval of the velocity to be measured changes automatically in an inverse proportion to the velocity value. This feature of the SCP method is connected with the sequential periodic execution of velocity measurement cycles, the duration of which determines the quantity of the quantization interval. At the same time in most cases involving the motion of objects, their velocities can change simultaneously in a wide angle and with different frequency. It is evident, that the use of the SCP method of velocity measurement in this case (providing the tolerable error of restoration of a process of velocity changes) is only possible when the following condition is satisfied:

$$t_{cmax} < t_{qv(min)} , \tag{2}$$

where:

$t_{cmax}$      is the maximum possible time in sec for the execution of a cycle of velocity measurement (at the minimal value) ; and

$t_{q\gamma(min)}$      is the required minimal time quantization interval in sec of the velocity to be measured, which is determined with reference to the given tolerable error of restoration of the process of changes of the velocity $\delta_{vp(max)}$ and the maximum possible frequency of the change $f_{vmax}$.

The execution of this condition (while solving said problems of measurement) required providing a small $t_{cmax}$. It is evident that (under the given range of changes of the object velocity) the provision of $t_{cmax}$ can only be achieved by minimizing the length of the measuring base $L_{AB}$. At the same time investigations of the metrologic possibilities of the SCP method of measurement showed that its usage requires:

1) the execution of conditions (1) and (2);
2) the provision of the given tolerable error of measurement of velocity in the cycle $\delta_{vc(max)}$ ;
3) the provision of the given range of velocity measurements, with reference to the execution of the additional condition of the choice of the length of the measuring base:

$$V_{max} \cdot \tilde{t}_{imax}^{(V_{max})}(P) < L_{AB} > V_{min} \cdot \bar{t}_{imax}^{(V_{min})}(P) , \tag{3}$$

where:

$\bar{t}_{imax}^{(V_{max})}(P), \bar{t}_{imax}^{(V_{min})}$      are probability values in sec of the maximal possible interval of time between two nearest consistently placed local parts of the object (along the direction of its motion), having different "images", the values being determined by using the results of statistical and probability investigations of the distribution of small quantities of the derivative, respectively, and $X'_{min}^{(V_{max})}(P), X'_{min}^{(V_{min})}(P)$ of the dominant informative component of the informatively-structural inhomogeneity, which are determined under the motion velocity of the object, respectively, $V_{max}$ and $V_{min}$ at the given level of the probability reliability P, and with reference to the threshold of sensitivity $\Delta X_0$ of the process of determination of the signs for identification of the "image" of the selected local part of the object; and

4) the possibility (in some cases) to make the zone of observation take into consideration the condition:

$$L_{AB} > b \, , \tag{4}$$

where

b   is the maximal size in m of the sensing zone of the inhomogeneity of the object (along the direction of its motion), which is chosen in accordance with the provision of the optimum (from possible) probability of values and frequency characteristics of processes of changes of the selected dominant component of informatively-structural inhomogeneity of the object.

The analysis, however, shows that in most cases (while solving the problems of measurement of velocity motion of the class of objects) it is practically impossible to provide simultaneous completion of the above conditions. This limits the possibilities of efficiently using the SCP method of velocity measurement for sensing the dynamics of the motion of this class of objects, when the motion is characterized by a large dynamics range and by a wide frequency range of velocity change.

Disclosure of Invention

The aim of the present invention is to increase the accuracy and speed of measurements of the SCP method of velocity measurement of an object with informatively-structural inhomogeneity with provision for the variance of the metrologic characteristics of method to the changes of velocity in the magnitude dynamic and wide frequency ranges.

This aim is achieved by using a new universal approach to the periodic fulfillment of the cycles of velocity measurement in the SCP method. This approach provides the possibility to execute cycles in turn sequentially, as well as sequentially-concurrently. The possibility is reached since, in the new similar cycle of velocity measurement of the object,

selection of the local part of the object is executed after selection of the local part of the object at the beginning of the current cycle of velocity measurement and over the given interval of time of the shift of the cycles $\Delta t_{cg}$ , the value of which is chosen with reference to satisfying the conditions:

$$\bar{t}_{imax}{}^{(V_{min})} (P) < \Delta t_{cg} > \bar{t}_{imax}{}^{(V_{max})} (P) + L_{AB} \cdot \frac{\left|+ \alpha_{max}\right| \cdot \bar{t}_{imax}{}^{(V_{max})} (P)}{V_{min}[V_{min} + \left|+\alpha_{max}\right| \cdot \bar{t}_{imax}{}^{(V_{max})} (P)} \tag{5}$$

$$\Delta t_{cg} < t_{q_{V(min)}} - L_{AB} \cdot \frac{\left|+ \alpha_{max}\right| \cdot t_{qv(min)}}{V_{min}[V_{min} + \left|-\alpha_{max}\right| \cdot t_{qv(min)}} \tag{6}$$

where

$\left|+\alpha_{max}\right|, \left|-\alpha_{max}\right|$     are absolute values in m/sec$^2$ of given maximal, respectively, positive and negative accelerations, which can arrive during the motion of the object; and

$L_{AB}$     is the length in n of the measuring base, which is chosen with respect to fulfillment of conditions (1) and (3), the operations of :

determining the time of motion of the selected local part along the measuring base,
computing the value of the velocity of the object;
erasing the value of the object velocity memorized from the last resultative cycle of velocity measurement, and memorizing the computed value of the object velocity;
being executed sequentially in each said cycle of velocity measurement during the total time, chosen with the reference to fulfillment of the condition:

$$t_{\Sigma d,c,e,m} <$$

$$\frac{V_{min}\cdot|+\alpha_{max}|\cdot\Delta t_{cg}-V^2_{min}-|+\alpha_{max}|\cdot L_{AB} + +\sqrt{(V^2_{min} - V_{min}\cdot|+\alpha_{max}|\cdot\Delta t_{cg} + |+\alpha_{max}|\cdot L_{AB})^2 + 4V^3_{min}\cdot|+\alpha_{max}|\cdot\Delta t_{cg}}}{2\cdot V_{min}\cdot|+\alpha_{max}|}$$

(7)

where:

$\Delta t_{cg}$ is the chosen value in sec of the given interval of time of the shift of the cycles.

The novel features which are considered as characteristic for the invention are set forth in particular in the appended claims. The invention itself, however, both as to its construction and its method of operation, together with additional objects and advantages thereof, will be best understood from the following description of specific embodiments when read in connection with the accompanying drawings.

Brief Description of the Drawings

FIG. 1   is an example of a functional block-diagram of a measuring system, realizing the suggested SCP method of velocity measurement of an object having informatively-structural inhomogeneity (when $L_{AB} > B$).

FIG. 2   shows examples of the sequentially - concurrent (when $\eta = 5$) execution of cycles of velocity measurement of the object while using the developed SCP method of measurement (solid line on the graph of velocity), and the sequential execution of cycles of velocity measurement of the object while using the known SCP method of measurement (dashed line on the graph of velocity).

FIG. 3   illustrates the determination of temporal characteristics, used in conditions (3), (5) + (7) and (9) - (11).

FIG. 4   is an example of a possible realization of a zone of observation of the measuring system, realizing the suggested SCP method of velocity measurement of the object having informatively-structural inhomogeneity (when $L_{AB} < B$).

Best Mode of Carrying Out the Invention

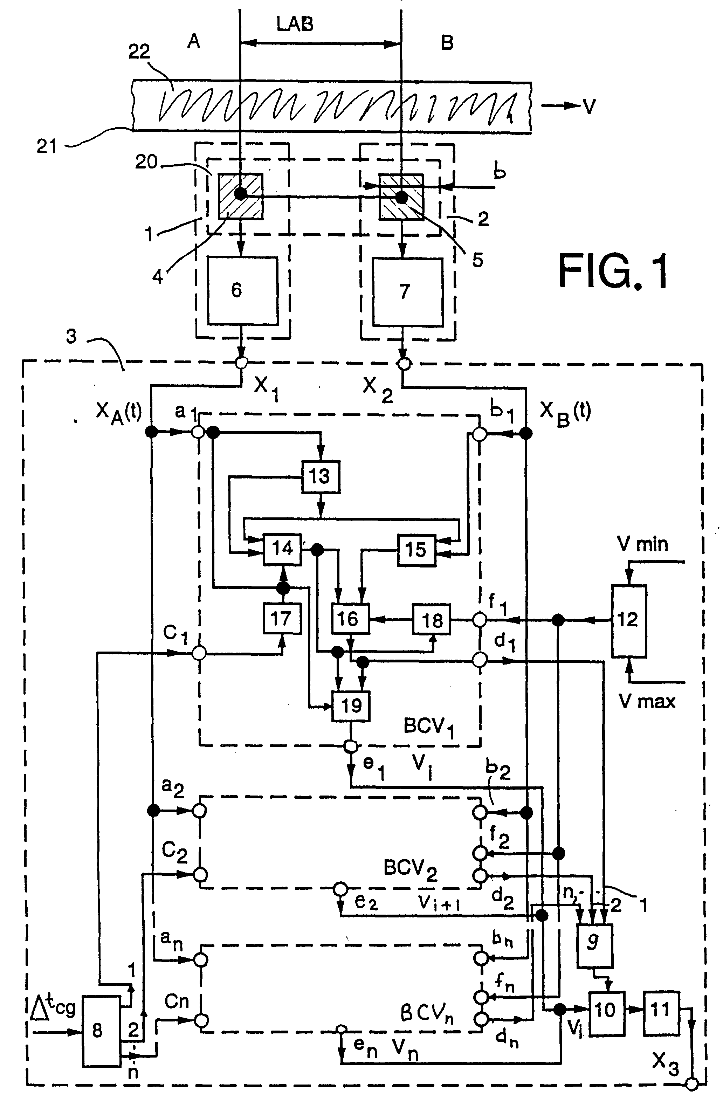

FIG. 1 is a functional block-diagram of an example of a measuring system which realizes the suggested SCP method of measurement of object velocity with informatively-structural inhomogeneity. The system comprises two transducers 1 and 2, having identical constructive parameters and metrologic characteristics, and an information processing device 3. Sensors 4 and 5 of the transducers 1 and 2 have identical shapes and area of working planes of sensing zones. The sensors 4 and 5 are connected, respectively, to inputs of conversion blocks 6 and 7 of the transducers. The outputs of the blocks 6 and 7 (i.e. the outputs of the transducers 1 and 2) are connected to inputs X1 and X2 of the information processing device 3. The device 3 comprises n equal velocity computation blocks ($BCV_1$, $BCV_2$, .., $BCV_n$), a synchronizing block 8, a logical "or" gate 9, a memory block 10, a filter 11, and a set-point device 12 of the range (or its part) of possible changes of velocity to be measured. Each velocity computation block (for example $BCV_1$) comprises a memory element 13 for memorizing a main identification sign, an element 14 for determining and memorizing an additional identification sign, an element 15 for comparing main signs and determining additional signs, an element 16 for signs, a comparing additional identification control unit 17, a unit 18 for deriving the interval of the time of identification, and a computing unit 19. The input of the element 13 and second input of the element 14 are connected to the working input $a_1$ of the block $BCV_1$, the second working input $b_1$ of which is connected to the second input of the element 15. The output of the element 13 is connected to the first inputs of the elements 14 and 15, the outputs of which are connected to the inputs of the element 16. The control inputs of the elements 13 and 14 and of the unit 19 are connected to the output of the unit 17, the input of which is connected to the input $c_1$ synchronizing the beginning of the work of the block $BCV_1$. The output of the element 14 is also connected to the first input of the unit 19 and to the control input of the unit 18. The output of the unit 18 is connected to the control input of the element 16, and the input of the unit 18 is connected to the defining input $f_1$ of the block $BCV_1$. The output of the element 16 is connected to the second input of the unit 19 and to the control output $d_1$ of the memory block $BCV_1$. The output of the unit 19 is connected to the working output $e_1$ of the block $BCV_1$. The working inputs ($a_1$, $a_2$,...,$a_n$) and ($b_1$, $b_2$,...$b_n$) of the blocks $BCV_1$ to $BCV_n$ are connected, respectively, to the inputs X1 and X2 of the device 3. The inputs $C_1$ to $C_n$ of the velocity computation blocks are connected, respectively, to outputs (1 to n) of the block 8, and the outputs $d_1$ to $d_n$ are connected

to respective inputs (1 to n) of the logical gate 9. The output of the gate element 9 is connected to the control input of the memory block 10, to the input of which are connected working outlets $e_1$ to $e_n$ of the velocity computation blocks.

The output of the set-point device 12 is connected to defining inlets $f_1$ to $f_n$ of the blocks $BCV_1$ to $BCV_n$. The output of the memory block 10 is connected to the input of the filter 11, the output of which is connected to the output X3 of device 3.

The suggested SCP method of object velocity measurement is realized under the measuring system in the following way.

First the positioning of the measuring base $L_{AB}$ of the zone of observation 20 is executed in arallel to the direction of the motion of the object 21 having the informatively-structural inhomogeneity 22 (for example, an optical inhomogeneity). The length of the measuring base $L_{AB}$ is selected with reference to the given error of measurement and the range of velocity changes of the object 21, and under the fulfillment of conditions (1) and (3).

The sensors 4 and 5 (i.e. the sensing zones (A) and (B) of the inhomogeneity 22 of the object 21 are positioned in the observation zone 20. The axes of symmetry of the working planes of the elements cross the ends A and B of the measuring base $L_{AB}$ and are located parallel to each other.

The dominant informative component of the informatively-structural inhomogeneity 22 of the object 21 is selected with the help of the transducers 1 and 2. This selection of the informative component takes place within the sensing zones (A) and (B) of the inhomogeneity 22 by sensing using the sensors 4 and 5, respectively, followed by the conversion of information in the blocks 6 and 7. The occasional signals $X_A(t)$ and $X_B(t)$, which are proportional to the dominant component or the inhomogeneity, are selected, respectively, in the first sensing zone (A) and the second sensing zone (B) (along the motion of the object 21) and are inputted via the inputs an X2 of the information processing device. The optimization of the frequency characteristics of the process of changing the selected dominant component of the inhomogeneity of the object and the probability values $\bar{t}_{lmin}$ (P), $\bar{t}_{fmin}$ (P), $\bar{t}_{imax}^{(Vmax)}$ (P) and $\bar{t}_{imax}^{(Vmin)}$ (P) is achieved by choosing the required sizes of the working planes of the sensors 4 and 5, and also by providing in the blocks 6 and 7 of the transducers 1 and 2 an optimum band of frequency spectrum filtration, respectively, of signals $X_A(t)$ and $X_8(t)$.

As it has been noticed before, the longitudinal maximal size B of the sensing zone of inhomogeneity is also of great importance. The example of realization of the zone of observation 20 when $L_{AB} > B$ is illustrated in FIG. 1.

The velocity computation block $BCV_1$ begins working after the signal enters its input $c_1$ from the output 1 of the synchronizing block 8. At that time, after the command from the control unit 17, the following operations are executed simultaneously:

- the local part of the object in the first sensing zone A in the beginning of current cycle of velocity measurement is selected;
- the informative aggregate of chosen informative signs of the dominant informative component $X_A(t)$ is determined in the said local part;
- the informative aggregate of the signs for identification of the "image" of the selected local part is memorised (in the memory elements 13 and 14); and
- the determining of the time of moving of the local part along the measuring base $L_{AB}$ is commenced (in the computing unit 19). In this example the selection of the local part is executed at the time when the value of said component $X_A(t)$, (defining the local part), enters via the working input $a_1$ of the $BCV_1$ the input of the memory element 13, where the value of signal is immediately memorized (the main sign for the identification of the "image" of the selected local part). The sign of increment (+ or -) of the component $X_A(t)$, i.e. the additional sign for the identification of the "image", is determined and memorized in the element 14 immediately after the main sign has been memorized in the element 13. The memorized information about the additional sign of identification (a logical signal "+1" or "-1") is sent to the input of the comparison element 16 from the output of the element 14 (for example a comparator). At the same time the logical signal is supplied to the first input of the unit 19. At that moment there is commenced in the unit 19 the determination of the time during which the selected local part moves along the measuring, base $L_{AB}$, when the command from the unit 17 at the control input of the unit 19 is available. The informative (both the main and the additional) signs for identification of the selected local part of the object 21, which are memorized, respectively, in the elements 13 and 14, represent the informative aggregate of signs of the dominant informative component $X_A(t)$. The information about the informative aggregate of the signs for the identification of the "image" of the selected local part is sent to the first inputs of the sign comparison elements 15 and 16. The execution of the selection of the local parts of the object in the second sensing zone B then takes place. The selection is executed continuously by fixing values of the component $C_B(t)$ which enter through the working input $b_1$ of $BCV_1$ and pass to the second input of the element 15. With the help of elements 15, 16 and 18, the two following operations of the velocity measurement method are executed:

    determining the informative aggregates of chosen informative signs in the continuously selected local parts of the object 21, and

comparing of the memorized informative aggregate of the signs with the being determined informative aggregates of the signs. The values of the signal $X_B(t)$, which are supplied to the second input of the element 15, are the main being determined signs for identification of "images" of continuously selected local parts. The values of signal $X_B(t)$ are continuously compared with those memorized in the element 13 (i.e. the values of signal $X_A(t)$).

At the moment of coincidence of the value of one signal $X_B(t)$ with the memorized value of signal $X_A(t)$ in the element 15 (for example, a comparator) the sign of increment (+ or -) of the signal $X_B(t)$ is determined. Simultaneously the sign of increment (+ or -), i.e. the additional sign for identification of the "image", is compared in the element 16 with the sign of increment (+ or -) memorized in the element 14. The comparison is executed during the interval time of identification, which is derived at the output of unit 18. The value of the interval of time of identification is defined at the input of the element 18 as the command comes from the output of the set-point device 12 for the range of possible changes of velocity to be measured. The range of expected changes of velocity $V_{min}$ - $V_{max}$ is settled by the operator at the inputs of the set-point device 12 before the commencement of the measurement of the velocity of the object 21. The operation of the element 18 begins when its control input receives the signal from the output of element 14 at the moment of beginning of the determination of the time of motion of the selected local part. When the additional sign of identification, determined in element 15, coincides with the memorized similar sign in element 14, a command is generated at the output of the comparison element 16. The command can only be derived during the period when there is a command at the control input of element 16, which time of action is equal to the interval of time of identification. This condition provides the required immunity to interference in the process of the identification of the "image" of the selected local part of the object 21 during its motion along the observation zone 20.

The comparison (in this device) ends at the moment when there is coincidence between the memorized informative aggregate of signs for identification of the "image" with one from the informative being determined aggregate of similar signs. Coincidence occurs when the "image" of the selected local part (i) is in second sensing zone B, i.e., in the end of the measuring base $L_{AB}$. In addition the finishing of the comparison can also occur at the moment when the interval of time of identification finishes (i.e. when the coincidence of the being compared informative aggregates of the signs fails), in other words when the command from the output of unit 18 ceases to be supplied to the control input of the element 16.

The command from the output of the comparison element 16 is supplied to the second input of the computing unit 19 and the input 1 of the logical element 9 (via the control output of the memory block $d_1$ of the $BCV_1$) . Under this command the following operations are executed:

determination of the time of moving $t_{Mi}$ of the local part along the measuring base $L_{AB}$ , and
computation in the computing unit 19 of the value of the velocity $V_i$ of the object 21 in the current cycle of measurement:

$$V_i = \frac{L_{AB}}{t_{mi}}, \text{ m/sec.} \tag{8}$$

The signal, proportional to the computed value of velocity $V_1$, is sent from the output of the computing unit 19 to the input of the memory block 10 (through outlet $e_1$ of the $BCV_1$).

The erasing of the value of object velocity $V_{i-1}$, memorized from the previous resultative cycle of velocity measurement, and the memorizing of the computed value of object velocity $V_i$, are executed in block 10 as the command from element 9 is supplied to the control input of the block 10.

After execution of these operations, the supply of the signal from the output of the unit 19 and of the command from the output of the element 16 cease. It is achieved, for example, with the help of circuit solutions providing the time retardation of erasing the output information in element 16 and unit 19. (For the stated time $t_{\Sigma d,c,\,l,\,m}$ after the moment of generation of the command in element 16).

When the command from the output of unit 18 ceases to be supplied to the control input of element 16 (after termination of the interval of time of identification), the element 16 loses the ability to produce a command signal. At that time the information is not supplied to the inputs of the element 9 and memory block 10. In the block 10 there is saved the value of object velocity $V_{i-1}$, memorized from the previous resultative cycle of velocity measurement. At the end of a current cycle of measurement, the information about the velocity $V_i$ or $V_{i-1}$ supplied from the output of the memory block 10 is passed to the output X3 of the device 3 via filter 11.

A new similar cycle of velocity measurement of the object begins after the command from output 2 of the synchronizing block 8 is supplied to the input $c_2$ of the velocity computation block $BCV_2$. The command from output 2 of the block 8 is derived over the given interval of time of shift of cycles $\Delta t_g$ after the command from output 1 of the block 8 is supplied to the input $c_1$ of $BCV_1$. In the new cycle of velocity measurement selection of the local part (i+1) of the object 21 is executed after the selection of the local part (i) of said object in the beginning of the current cycle of velocity measurement and over the given interval of time of shift of cycles $\Delta t_g$, the value of which was chosen with reference to fulfillment of conditions (5) and (6) above. In the new cycle of velocity measurement all operations are executed sequentially in $BCV_2$. The information $X_A(t)$ and $X_B(t)$ supplied to the respective working inputs $a_2$ and $b_2$ of the $BCV_2$ is used similarly. In the computing unit of $BCV_2$ there is executed the determination of the time of motion $t_{mi+}1$ of the local part (i+1) along $L_{AB}$ and the computation of the value of velocity $V_{i+1}$. The erasing of the value of velocity $V_i$ and the memorizing of the velocity $V_{i+1}$, which is supplied to the input of block 10 from the outlet $e_2$ of $BCV_2$, are executed after the respective command from the outlet $d_2$ of $BCV_2$ in the memory block 10. If the "image" of the selected local part (i+1) cannot be detected during the interval of time of identification, the value of velocity $V_i$ is saved in block 10. Then, the information about the velocity is passed to the output $X_3$ of device 3 from the memory block 10 via filter 11 ($V_{i+1}$ or $V_i$).

As the analysis shows the provision of reliable time sharing of terminations of two nearest cycles of velocity measurement (while choosing the total time for execution of the operations of: determination of the time of motion $t_{Mi+1}$; computation of the value $V_{i+1}$; erasing of the value $V_i$; and memorizing of the value $V_{i+1}$) requires the fulfillment of the condition

$$t_{\Sigma d,e, l, m} < t_{qv(min)}^{(w)} \, , \qquad (9)$$

where:

$t_{qv(min)}^{(w)}$ is the minimal possible working time quantization interval of velocity to be measured in sec which is determined by the right hand side of condition (7).

The expression for the determination of $t_{qv(min)}^{(w)}$ is obtained while solving the quadratic equation, composed from the condition:

$$t_{qv(min)}^{(w)} = \Delta t_{cg} - \Delta t_{max} \, , \qquad (10)$$

where:

$\Delta t_{max}$ is the maximal possible decrease of said time, for example $t_{Mi+1}$ (determined in a new cycle of velocity measurement) relative to $t_{Mi}$ (determined in a previous cycle of velocity measurement), $\Delta t_{max}$ being determined from the expression:

$$\Delta t_{max} = L_{AB} \cdot \frac{\left| + \, \alpha_{max} \right| \cdot t_{qv(min)}^{(w)}}{V_{min}[V_{min} + \left| + \alpha_{max} \right| + t_{qv(min)}^{(w)}]}, \qquad (11)$$

which is derived from the situation when $V_i = V_{min}$, and $V_{i+1}$ is reached under the action of $\alpha_{max}$ during the time $t_{qv(min)}^{(w)}$.

The synchronizing block 8 then derives at its outputs (1 to n) similar commands over the given interval of time of shift of cycles $\Delta t_{cg}$. The commands provide the beginning of work of the velocity measurement blocks ($BCV_1$ to $BCV_m$) over the interval of time $\Delta t_g$ in turns.

The number of blocks n is chosen with reference to fulfillment of the condition:

$$n > \frac{t_{cmax}}{\Delta t_{cg}} \qquad (12)$$

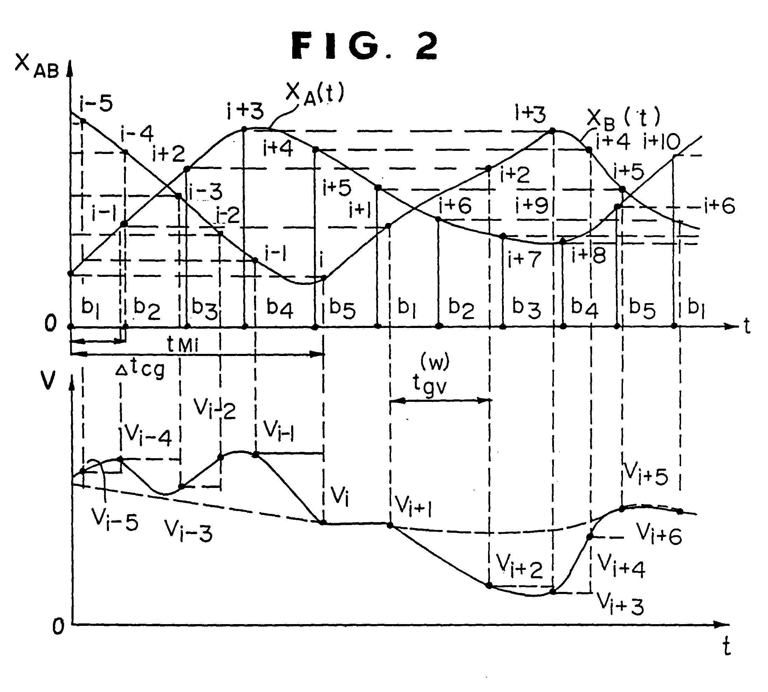

The fulfillment of condition (12) gives the possibility to provide the minimum necessary quantity of blocks of velocity computation in the information processing device 3. When the respective commands are coming from the outputs (1,2,...,n,1,2... ) of the block 8, the starting of the blocks ($BCV_1$, $BCV_2$, ..., $BCV_n$, $BCV\underline{1}$, $BCV_2$, ... , $BCV_n$, ... ) is realized sequentially and in turn. In the process of work of the blocks at the output of the memory block 10, the value of velocity, computed in each cycle of measurement, is fixed. At the output of the filter 11, a signal, proportional to the process of change of velocity of the object, is derived (see FIG. 2). The error of velocity measurement in the cycle does not exceed $\delta_{vc(max)}$ and the error of restoration of the process of change of velocity does not exceed $\delta_{vp(max)}$.

The SCP method of velocity measurement enables fulfilling the cycles of measurement sequentially and sequentially-concurrently as well. This approach enables the length of the measuring base $L_{AB}$ to be chosen only with reference to conditions (1) and (3), without taking into consideration the limits, following condition (2). Condition (1) determines the upper bound, and condition (3) determines the lower bound, while choosing $L_{AB}$ (under the given range of possible changes of object velocity). Condition (3) is derived with reference to the necessity of providing the minimum possible time for execution of the cycle of velocity measurement (when $V = V_{min}$, and when $V = V_{max}$) with reference, respectively, to the probability values $\bar{t}^{(V_{min})}_{i_{max}}$ (P) and $\bar{t}^{(V_{max})}_{i_{max}}$ (P).

Besides that, the choice of a given interval of time of shift of cycles $\Delta t_{cg}$, with reference to conditions (5) and (6), provides the working time quantization interval of velocity:

$$t^{(w)}_{qv} < t_{qv(min)} . \tag{13}$$

It is achieved when the upper bound $\Delta t_{cg(max)}$ , while choosing $\Delta t_{cg}$ (the condition (6)), is determined for the situation when the velocity is decreasing to the utmost (in the next cycle of measurement) from $V_i$ till $V_{i+1} = V_{min}$ under the action of given acceleration - $\alpha_{max}$ during the time $t_{qv(min)}$.

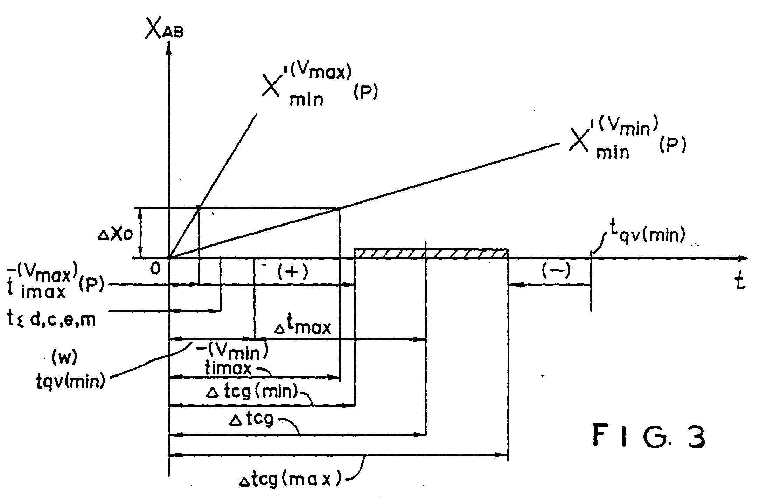

The lower bound $\Delta t_{cg(min)}$, while choosing $\Delta t_{cg}$ (condition (5)), is determined with the reference to the necessity of providing (see FIG. 3):

- the possibility of reliable selection of the local part of the object in the beginning of the next cycle of measurement (left hand side of condition (5)), and
- the reliable identification of the selected local part in the end of the next cycle of measurement (the greater part of condition (5) : left or right hand side).

The right hand side of condition (5) is determined for the situation when the velocity is increasing to the utmost (in the next cycle of measurement) under the action of given acceleration of $+\alpha_{max}$ from $V_i = V_{min}$ to $V_{i+1}$ during time $\bar{t}^{(V_{max})}_{i_{max}}$ (P). While deriving conditions (5), (6) and (7), situations are considered in the lower part of the range of possible changes of object velocity ($V_{min}$). It is explained by maximal absolute possible changes $t_M$ in the part of the range of velocity changes when the time $t_M$ in the cycle of measurement has large magnitudes. The use of said attitude enables the derivation of said conditions, the fulfillment of which provides the required reliability in realization of the suggested SCP method of measurement.

It should be noted that the working time quantization interval of velocity is:

$$t^{(w)}_{qv} = \Delta t_{cg} \tag{14}$$

(in steady regimes and under any values of velocity in limits of given range of its possible changes). The working quantization interval can change in limits:

$$t^{(w)}_{qv(min)} \leq t_{qv} . < t_{qv(min)} \tag{15}$$

(only in transitional regimes of process of changes of velocity of the object). The possibilities of digitization of information about measured velocity of objects are the result of a new universal attitude to forming of the process of velocity measurement in the suggested SCP method of measurement. They provide the achievement of quantitatively new metrologic possibilities (the increase of accuracy and high speed) of the process of measurement of object velocity, which are invariant to changes of the velocity in magnitude dynamic and wide frequency ranges.

Conditions (1), (3), (5), (6), and (7), used in the suggested SCP method connect the number of given, determined and chosen parameters:

a) $V_{min}$, $V_{max}$, $+\alpha_{max}$, $-\alpha_{max}$, $f_{vmax}$,
$\delta_{vc(max)}$, $\delta_{vp(max)}$ and $t_{qv(min)}$
(which provide an account of all requirements,
imposed to the process of measurement of velocity of the object);

b)

$$L_{AB}, \Delta X_o, \bar{t}_{imax}^{(vmax)}(P) = f[X'^{(vmax)}_{min}(P), \Delta X_o]$$

$$\bar{t}_{imax}^{(vmin)}(P) = f[X'^{(vmin)}_{min}(P), \Delta X_o], \bar{t}_{lmin}(P),$$

$$\bar{t}_{f(min)}(P) \text{ and } P$$

(which provide the possibility of the determination of required optimal structural parameters, metrological and amplitude-frequency characteristics of transducers, used in a measurement system, which realize the suggested SCP method of velocity measurement of the object with the informatively-structural inhomogeneity); and

c) $\Delta t_{cg}$ and $t_{\Sigma d,c,l,m}$

(which provide the possibility of the choice of both the optimal structural solutions, for example, the quantity of blocks of velocity computation $\eta$, and temporal parameters of action of all elements, units and blocks of information processing device 3 of the measurement system).

The completeness of developed theoretical bases of the suggested SCP method of velocity measurement gives wide possibilities for creating a whole class of measurement systems (devices) for receiving information about the dynamics of motion of objects with informative-structural inhomogeneity. The compactness and reliability of such measurement devices (systems) is easily provided by usage of up-to-date, high speed microprocessor components. The measuring devices (systems) can execute per second practically any number ($10^2$ - $10^6$) of cycles of measurement of the object velocity. The possibilities of similar devices (systems) makes them preferable to all known devices of similar purpose.

The kind of informatively-structural inhomogeneity of a particular object (chosen by the developer, while creating a device for the measurement of its velocity) defines the type of transducer used for selection of the dominant informative component of said inhomogeneity.

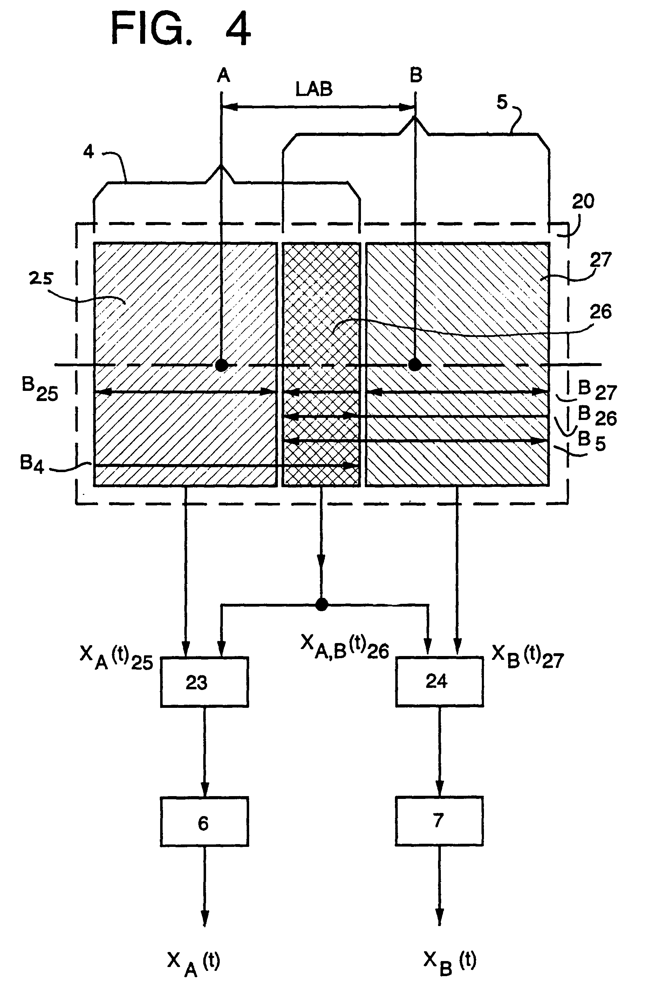

In a given example of the realization of a suggested SCP method of measurement (FIG. 1), the maximal longitudinal side of the sensors 4 and 5 of the transducers 1 and 2 is such that $B < L_{AB}$. However, when the required sizes of B and $L_{AB}$ (which provide the possibility of realizing a measurement system employing the suggested SCP method of measurement) are being determined, the necessity (in a number of cases) of structural realization of the zone of observation 20 can appear, under the condition, when $B > L_{AB}$. In that case it is suggested to use the circuit solution with usage of split working planes of the sensors 4 and 5 (FIG. 4). In the solution, maximal longitudinal sizes of the sensors are, respectively, equal:

$$B_4 = B_{25} + B_{26} > L_{AB} ,$$

$$B_5 = B_{27} + B_{26} > L_{AB} ,$$

and

$$B_{25} = B_{27} = L_{AB} ,$$

$$B_{26} = B_{4(5)} - L_{AB} .$$

Parts of the working planes (25, 26, and 27) are located along the zone of observation 20 and are structurally isolated from each other. Besides that, their outputs are isolated electrically from each other. The signal from the part 25 $X_A(t)_{25}$ is supplied to the first input of summator 23, and a signal from the part 27 $X_B(t)_{27}$ is supplied to the first input of summator 24. The signal from part 26 XA, $B(t)_{26}$ is supplied to the second inputs of the summators. The summation of the signals and the conversion in blocks 6 and 7 provide continuous reception of required signals $X_A(t)$ and $X_B(t)$, which are supplied to the information processing block 3 (FIG. 1) for computation of the velocity of the object 21.

The shape and area of the split working planes of the sensors 4 and 5 are similar.

Thus, the developed SCP method of measurement (by usage of said attitudes for its realization) gives quantitatively new possibilities for creating up-to-date small-sized measuring devices (systems) for velocity measurement (and also accelerations and extents) of objects with informatively-structural inhomogeneity.

While the invention has been illustrated and described as embodied in a sampled-continuous probability method of velocity measurement of the object having informatively-structural inhomogeneity, it is not intended to be limited to the details shown, since various modifications and structural changes may be made without departing in any way from the present invention as claimed.

**Claims**

1. A sampled-continuous probability method of velocity measurements of an object having informatively-structural inhomogeneity, comprising periodically executing cycles of said velocity measurement and, with each of the cycles, selecting in a beginning of a cycle a local part of an object in a beginning of a measuring base by determining and memorizing an informative aggregate of chosen informative signs of a dominant informative component of the inhomogeneity of the object, determining a time of motion of the selected local part of the object along the measuring base between a time of the selecting of the local part and a time of passing of the selected local part over an end of the measurement base determined by a coincidence of the memorized informative signs with an analogous aggregate of informative signs of the object which after the beginning of the cycle are continuously determined at the end of the measurement base, and determining an object velocity from the end of motion of the local part from the moment of its selection to the moment of its passage through the end of the measurement base and a length of the measurement base, **characterized by** beginning each subsequent one of said cycles of the velocity measurements within a preceding one of said cycles of the velocity measurements.

2. A sampled-continuous probability method of velocity measurements of an object having informatively-structural inhomogeneity by periodic execution of a cycle of said velocity measurement with determination of time during which a selected local part of the object moves along a measuring base of a zone of observation, the method comprising the steps of:

   before beginning of an execution of said cycles of velocity measurement:

   - positioning the measuring base of said zone of observation parallel to the direction of motion of the object,
   - disposing in said zone of observation in the direction of motion of the object first and second zones of sensing said inhomogeneity, and
   - selecting a dominant informative component of said informatively-structural inhomogeneity of the object in said sensing zones;

   in each of said cycles of velocity measurement:

   - selecting a local part of the object in said first zone of sensing in the beginning of a respective cycle of velocity measurement,
   - determining in said local part an informative aggregate of chosen informative signs of the dominant informative component of said inhomogeneity,
   - memorizing said informative aggregate signs for identification of an image of said selected local part of said object, simultaneously,
   - starting determining a time of moving of said local part along said measuring base of a known length,
   - continuously selecting local parts of said object in said second zone of sensing,
   - determining said informative aggregate of said chosen informative signs in said continuously selected local parts,
   - comparing said memorized informative aggregate of said signs with said determined informative aggregates of said signs during an interval of time of identification,
   - determining said time of motion of said local part of the object along said measuring base at a moment of coincidence of the compared aggregates of said signs,
   - computing a velocity of said object,
   - erasing a value of the velocity of the object memorized in a preceding cycle of the velocity measurement, and
   - memorizing said computed value of the velocity of the object at the end of the current cycle of velocity measurement or, instead of said memorizing,
   - saving said value of the velocity of the object, memorized from a last cycle of velocity measurement, when said coincidence is absent at the moment of finishing of said interval of time of identification;

beginning each cycle of velocity measurement on

a command formed after beginning of a preceding cycle of velocity measurement after a given interval of time of shifting of the cycle but within the preceding cycle; and

in each cycle of velocity measurement selecting a total

time of execution of last stages including determining, computing, erasing and memorizing, a smaller than minimum possible working step of time quantization of velocity to be measured,

so that each cycle of the velocity measurements begins within a preceding cycle of the same.

3. A method according to claim 2, further comprising the step of selecting said zones so that they have identical shapes and areas and their axes of symmetry intersect ends of said measuring base and are parallel to one another.

**Patentansprüche**

1. Abtast-/kontinuierliches Wahrscheinlichkeitsverfahren zur Geschwindigkeitsmessung eines Objekts mit informativ-struktureller Inhomogenität, mit den folgenden Schritten: periodisches Ausführen von Zyklen der Geschwindigkeitsmessung, wobei bei jedem der Zyklen an einem Anfang eines Zyklus ein lokaler Teil eines Objekts an einem Anfang einer Meßbasis ausgewählt wird, indem ein informatives Aggregat gewählter informativer Zeichen einer dominanten informativen Komponente der Inhomogenität des Objekts bestimmt und gespeichert wird, Bestimmen einer Bewegungszeit des gewählten lokalen Teils des Objekts entlang der Meßbasis zwischen einem Zeitpunkt der Auswahl des lokalen Teils und einem Zeitpunkt des Überquerens eines Endes der Meßbasis durch den gewählten lokalen Teil, der durch das Zusammenfallen der gespeicherten informativen Zeichen mit einem analogen Aggregat informativer Zeichen des Objekts bestimmt wird, die nach dem Anfang des Zyklus kontinuierlich am Ende der Meßbasis bestimmt werden, und Bestimmen einer Objektgeschwindigkeit aus dem Ende der Bewegung des lokalen Teils von dem Moment seiner Auswahl zu dem Moment seines Durchquerens des Endes der Meßbasis und einer Länge der Meßbasis, **dadurch gekennzeichnet, daß** jeder nachfolgende der Zyklen der Geschwindigkeitsmessungen in einem vorherigen der Zyklen der Geschwindigkeitsmessungen angefangen wird.

2. Abtast-/kontinuierliches Wahrscheinlichkeitsverfahren zur Geschwindigkeitsmessung eines Objekts mit informativ-struktureller Inhomogenität durch periodisches Ausführen eines Zyklus der Geschwindigkeitsmessung unter Bestimmung der Zeit, in der sich ein gewählter lokaler Teil des Objekts entlang einer Meßbasis einer Beobachtungszone bewegt, mit den folgenden Schritten:

vor dem Anfang einer Ausführung der Zyklen der Geschwindigkeitsmessung:

Positionieren der Meßbasis der Beobachtungszone parallel zu der Bewegungsrichtung des Objekts, Anordnen einer ersten und einer zweiten Zone der Erfassung der Inhomogenität in der Beobachtungszone in der Bewegungsrichtung des Objekts, und Auswählen einer dominanten informativen Komponente der informativ-strukturellen Inhomogenität des Objekts in den Erfassungszonen;

in jedem der Zyklen der Geschwindigkeitsmessung:

Auswählen eines lokalen Teils des Objekts in der ersten Zone der Erfassung am Anfang eines jeweiligen Zyklus der Geschwindigkeitsmessung, Bestimmen eines informativen Aggregats gewählter informativer Zeichen der dominanten informativen Komponente der Inhomogenität in dem lokalen Teil, Speichern der Zeichen des informativen Aggregats zur Identifizierung eines Bildes des gewählten lokalen Teils des Objekts, gleichzeitig, Starten der Bestimmung einer Bewegungszeit des gewählten lokalen Teils entlang der Meßbasis einer bekannten Länge, kontinuierliches Auswählen lokaler Teile des Objekts in der zweiten Zone der Erfassung, Bestimmen des informativen Aggregats der gewählten informativen Zeichen in den kontinuierlich gewählten lokalen Teilen,

Vergleichen des gespeicherten informativen Aggregats der Zeichen mit den bestimmten informativen Aggregaten der Zeichen während eines Zeitintervalls der Identifizierung,

Bestimmen der Bewegungszeit des lokalen Teils des Objekts entlang der Meßbasis an einem Zeitpunkt des Zusammenfallens der verglichenen Aggregate der Zeichen,

Berechnen einer Geschwindigkeit des Objekts,

Löschen eines Werts der Geschwindigkeit des Objekts, der in einem vorherigen Zyklus der Geschwindigkeitsmessung gespeichert wurde, und

Speichern des berechneten Werts der Geschwindigkeit des Objekts am Ende des aktuellen Zyklus der Geschwindigkeitsmessung, oder, anstelle des Speicherns,

Sichern des Werts der Geschwindigkeit des Objekts, der aus einem letzten Zyklus der Geschwindigkeitsmessung gespeichert wurde, wenn das Zuammenfallen im Moment des Endens des Zeitintervalls der Identifizierung ausbleibt;

Anfangen jedes Zyklus der Geschwindigkeitsmessung bei

einem Befehl, der nach dem Anfang eines vorherigen Zyklus der Geschwindigkeitsmessung nach einem gegebenen Zeitintervall der Verschiebung des Zyklus, aber in dem vorherigen Zyklus, gebildet wird; und

in jedem Zyklus der Geschwindigkeitsmessung, Auswählen einer insgesamten

Ausführungszeit letzter Phasen, einschließlich Bestimmen, Berechnen, Löschen und Speichern eines weniger als minimal möglichen Arbeitsschritts der zeitquantisierung der zu messenden Geschwindigkeit,

so daß jeder Zyklus der Geschwindigkeitsmessungen in einem vorherigen Zyklus dieser anfängt.

3. Verfahren nach Anspruch 2, weiterhin mit dem Schritt des Auswählens der Zonen dergestalt, daß sie identische Formen und Flächen aufweisen und ihre Symmetrieachsen Enden der Meßbasis schneiden und parallel zueinander sind.

## Revendications

1. Procédé à probabilité continue échantillonnée, permettant de mesurer la vitesse d'un objet présentant une inhomogénéité structurale informative, comprenant l'exécution périodique de cycles de ladite mesure de vitesse et, avec chacun des cycles, la sélection, au début d'un cycle, d'une partie locale d'un objet au début d'une base de mesure en déterminant et en mémorisant un ensemble informatif de signes informatifs choisis d'une composante informative dominante de l'inhomogénéité de l'objet, la détermination d'un temps de déplacement de la partie locale sélectionnée de l'objet le long de la base de mesure entre le moment où la partie locale est sélectionnée et le moment où la partie locale sélectionnée franchit la fin de la base de mesure, moment déterminé par une coïncidence des signes informatifs mémorisés avec un ensemble analogue de signes informatifs de l'objet, qui, après le début du cycle, sont continuellement déterminés à la fin de la base de mesure, et la détermination d'une vitesse de l'objet depuis la fin du mouvement de la partie locale, depuis le moment où elle a été sélectionnée, jusqu'au moment où elle franchit la fin de la base de mesure, et une longueur de la base de mesure, **caractérisé par** le démarrage de chacun des cycles de mesure de vitesse suivants dans un desdits cycles précédents de mesure de vitesse.

2. Procédé à probabilité continue échantillonnée, permettant de mesurer la vitesse d'un objet présentant une inhomogénéité structurale informative par exécution périodique d'un cycle de ladite mesure de vitesse avec détermination du temps durant lequel une partie locale sélectionnée se déplace le long d'une base de mesure d'une zone d'observation, le procédé comprenant les étapes de :

avant le démarrage d'une exécution dudit cycle de mesure de vitesse :

- positionnement de la base de mesure de ladite zone d'observation parallèlement au sens de déplacement de l'objet,
- mise en place, dans ladite zone d'observation dans le sens de déplacement de l'objet, de première et deuxième zones de détection de ladite inhomogénéité, et
- sélection d'une composante informative dominante de ladite inhomogénéité structurale informative de l'objet dans lesdites zones de détection ;

dans chacun desdits cycles de mesure de vitesse :

- sélection d'une partie locale de l'objet dans ladite première zone de détection au début d'un cycle respectif de mesure de vitesse,
- détermination, dans ladite partie locale, d'un ensemble informatif de signes informatifs choisis de la composante informative dominante de ladite inhomogénéité,
- mémorisation desdits signes de l'ensemble informatif en vue de l'identification d'une image de ladite partie locale sélectionnée dudit objet, et, simultanément,
- démarrage de la détermination d'un temps de déplacement de ladite partie locale le long de ladite base de mesure d'une longueur connue,
- sélection continue de parties locales dudit objet dans ladite deuxième zone de détection,
- détermination dudit ensemble informatif desdits signes informatifs choisis dans lesdites parties locales sélectionnées de façon continue,
- comparaison dudit ensemble informatif mémorisé desdits signaux auxdits ensembles informatifs déterminés desdits signes durant un intervalle de temps d'identification,
- détermination dudit temps de mouvement de ladite partie locale de l'objet le long de ladite base de mesure à un moment de coïncidence des ensembles comparés desdits signes,
- calcul d'une vitesse dudit objet,
- effacement d'une valeur de la vitesse de l'objet mémorisée dans un cycle précédent de mesure de vitesse, et
- mémorisation de ladite valeur calculée de la vitesse de l'objet à la fin du cycle courant de mesure de vitesse ou, en lieu et place de ladite mémorisation,
- sauvegarder ladite valeur de la vitesse de l'objet, mémorisée depuis un dernier cycle de mesure de vitesse, en l'absence de ladite coïncidence à l'issue dudit intervalle de temps d'identification ;

démarrage de chaque cycle de mesure de vitesse sur une commande formée après le démarrage d'un cycle précédent de mesure de vitesse après un intervalle de temps donné de décalage du cycle, mais dans le cycle précédent ; et
dans chaque cycle de mesure de vitesse, sélection d'un temps d'exécution total de dernières étapes, y compris la détermination, le calcul, l'effacement et la mémorisation, inférieur au minimum utilisable possible du pas de quantification temporelle de la vitesse à mesurer,
de sorte que chaque cycle des mesures de vitesse démarre dans un cycle précédent de celles-ci.

3. Procédé selon la revendication 2, comprenant en outre l'étape de sélection desdites zones de façon à ce qu'elles présentent des formes et aires identiques et que leurs axes de symétrie coupent des extrémités de ladite base de mesure et soient mutuellement parallèles.

FIG.1

# FIG. 2

F I G. 3

# FIG. 4